# EUROPÄISCHE PATENTSCHRIFT

(11) **EP 4 136 422 B1**
(45) Veröffentlichungstag und Bekanntmachung des Hinweises auf die Patenterteilung: **13.08.2025**
(21) Anmeldenummer: 21716300.5
(22) Anmeldetag: 25.03.2021
(51) Int. Cl.: G01L 1/25, G01L 5/00, G01M 5/00, F27B 14/06, G01L 1/14, F27B 14/20, F27D 21/00

(54) **VERFAHREN UND VORRICHTUNG ZUR ÜBERPRÜFUNG EINES INDUKTIVEN BAUTEILS**
METHOD AND DEVICE FOR MONITORING AN INDUCTIVE COMPONENT
PROCÉDÉ ET DISPOSITIF POUR VÉRIFIER UN COMPOSANT INDUCTIF

(30) Priorität: 17.04.2020 DE 102020110534
(43) Veröffentlichungstag der Anmeldung: 22.02.2023
(73) Patentinhaber: Fraunhofer-Gesellschaft zur Förderung der angewandten Forschung e.V., 80686 München (DE)
(72) Erfinder: KAAL, William, 64289 Darmstadt (DE); FRIEDMANN, Andreas, 64289 Darmstadt (DE)
(74) Vertreter: 2SPL Patentanwälte PartG mbB
(86) Internationale Anmeldenummer: PCT/EP2021/057853
(87) Internationale Veröffentlichungsnummer: WO 2021/209246

(56) Entgegenhaltungen:
- EP-A1- 3 805 683
- WO-A1-2012/159208
- CN-A- 106 197 766
- CN-A- 106 768 509
- DE-B1- 1 573 408
- US-A- 5 813 280

## Beschreibung

### Technisches Gebiet

Ausführungsbeispiele beziehen sich auf ein Verfahren und eine Vorrichtung zur Überprüfung eines induktiven Bauteils. Ausführungsbeispiele der vorliegenden Erfindung beziehen sich auf ein Verfahren und eine Vorrichtung zur Überprüfung einer Beanspruchung einer Spule des induktiven Bauteils.

### Hintergrund

In Induktionsöfen wird von einer Spule zur induktiven Erwärmung eines Schmelzguts ein elektromagnetisches Feld erzeugt. Das elektromagnetische Feld kann derart mit der Spule wechselwirken, so dass das elektromagnetische Feld axial und radial wirkende Kräfte auf die Spule ausübt. Um dadurch verursachte Bewegungen und/oder Verformungen/Deformationen der Spule zu verhindern, kann diese mechanisch fixiert und vorgespannt werden. Eine Verringerung oder gar ein Verlust der Vorspannung und dadurch mögliche Bewegungen oder Verformungen der Spule im Betrieb können sich selbstverstärkende Wirkungen haben, welche die Spule selbst und andere Komponenten des Induktionsofens beschädigen oder zerstören können. Hierdurch verringert sich beispielsweise eine Standzeit eines Schmelztiegels des Induktionsofens. Alternativ oder zusätzlich können solche Wirkungen auch eine Verringerung einer Lebensdauer der Spule und deren Betonanker, mit welchen die Spule im Induktionsofen befestigt ist, zur Folge haben.

Ein bekanntes Vorgehen zur Sicherstellung der Vorspannung der Spule sieht vor, ein Drehmoment von Schraubverbindungen der Betonanker in vorgegebenen zeitlichen Intervallen zu überprüfen und gegebenenfalls nachzujustieren. Die CN 1 06 768 509 A beschreibt die Messung von Kräften und Vibrationen an Transformatorspulen. Basierend auf diesen Messungen kann eine gesamte und lokale Kompressionskraft der Transformatorspule mit einer Kompressionsvorrichtung eingestellt werden. Die US 5 813 280 A beschreibt einen akustischen Resonator, der als tragendes Element in Vorrichtungen zum Messen von Kraft dient. Der Resonator ist mit Spulen versehen. Wenn Strom durch die Spulen fließt, werden Wirbelströme im Mittelabschnitt des Resonators erzeugt, die akustische Schwingungen im Mittelabschnitt erzeugen, indem sie mit einem Magnetfeld interagieren, das von einem Magneten geliefert wird. Wenn die Frequenz der an die Spulen angelegten elektrischen Energie mit einer Resonanzfrequenz im Mittelabschnitt übereinstimmt, verstärkt die von der Spule gekoppelte elektromagnetische Energie konstruktiv die akustischen Schwingungen im Mittelabschnitt und erzeugt eine Resonanz mit großer Amplitude. Bei einer Schwingungsresonanz durchläuft der Realteil der gemessenen komplexen Impedanz der Spulen ein lokales Maximum. Die CN 106 197 766 A offenbart ein spannungserfassendes Material, das ein elastisches Grundmaterial aufweist, und eine Induktionsspiralfeder, die von dem elastischen Grundmaterial umhüllt ist. Die Induktionsspiralfeder ist aus elastischem Material hergestellt und hat eine spiralförmige Form ähnlich einer Feder. Die Induktionsspiralfeder ist parallel zu einem Kondensator geschaltet und an einen Schwingkreis angeschlossen. Wenn das spannungserfassende Material einer Spannung ausgesetzt wird, werden das elastische Grundmaterial und die Induktionsspiralfeder aus elastischem Material einer Spannung ausgesetzt und verformt, so dass sich die Frequenz des Schwingkreises entsprechend ändert. Die DE 15 73 408 B1 beschreibt einen Kraftumformer zum Messen von mechanischen Druckkräften. Eine Induktivität einer Magnetisierungswicklung ist abhängig von der auf den Kraftumformer ausgeübten Druckkraft. In der Regel liegt die Magnetisierungswicklung in einer Brückenschaltung, mit der die Änderung ihrer Induktivität gemessen wird, wenn der Kem der Einwirkung einer mechanischen Kraft ausgesetzt ist.

Die oben genannten Vorgehen zur Sicherstellung der Vorspannung der Spule können zusätzlichen Arbeitsaufwand beim Betreiben der Spule mit sich bringen.

Eine Aufgabe der vorliegenden Erfindung kann daher darin gesehen werden, ein verbessertes Konzept zur Überprüfung einer auf ein induktives Bauteil wirkenden mechanischen Spannung zu schaffen.

### Zusammenfassung

Diese Aufgabe wird mittels der unabhängigen und abhängigen Ansprüche gelöst werden.

Gemäß einem ersten Aspekt beziehen sich Ausführungsbeispiele vorliegender Offenbarung auf ein Verfahren zur Überprüfung einer auf ein induktives Bauteil wirkenden mechanischen Spannung. Das Verfahren umfasst ein Erfassen einer oder mehrerer von der mechanischen Spannung abhängiger Messgrößen beim Anliegen eines elektrischen Erregungssignals an dem induktiven Bauteil. Ferner umfasst das Verfahren ein Bestimmen der auf das induktive Bauteil wirkenden mechanischen Spannung anhand der einen oder mehreren erfassten Messgrößen.

Unter dem induktiven Bauteil kann insbesondere ein elektrisches Bauteil oder ein elektrischer Stromkreis verstanden werden, welche basierend auf dem Gesetz für elektromagnetische Induktion zur Erzeugung eines wechselnden elektromagnetischen Feldes geeignet sind. Das induktive Bauteil umfasst eine Spule In manchen Anwendungsbeispielen können das induktive Bauteil und/oder Teile des induktiven Bauteils, wie zum Beispiel die Spule, mechanisch fixiert oder abgestützt sein, so dass mechanische Spannung auf das induktive Bauteil wirkt. Die mechanische Spannung kann daher in manchen Anwendungsbeispielen als mechanische Vorspannung verstanden werden.

Das elektrische Erregungssignal kann entweder einer zum Betreiben des induktiven Bauteils elektrischen Energiezufuhr oder einem zur Überprüfung des induktiven Bauteils vorgesehenen elektrischen Prüfsignal entsprechen. Das elektrische Erregungssignal wird beispielsweise mittels eines mit dem induktiven Bauteil gekoppelten Signalgenerators an das induktive Bauteil angelegt. Das elektrische Erregungssignal ist beispielsweise ein Strom-/Spannungswechselsignal.

Beim Anliegen des elektrischen Erregungssignals kann das induktive Bauteil ein elektromagnetisches Feld erzeugen. Ein durch die Messgrößen gekennzeichnetes Verhalten des induktiven Bauteils bei Wechselwirkung mit dem elektromagnetischen Feld kann insbesondere von der mechanischen Spannung, die auf das induktive Bauteil wirkt, abhängen. Daher kann anhand der einen oder mehreren Messgrößen insbesondere auf die mechanische Spannung, die auf das induktive Bauteil wirkt, geschlossen werden.

Die ein oder mehreren Messgrößen sind zum Beispiel elektrische oder mechanische Messgrößen, die das Verhalten des induktiven Bauteils bei Wechselwirkung mit dem von dem induktiven Bauteil erzeugten elektromagnetischen Feld angeben. Es sei ferner darauf hingewiesen, dass, falls im Folgenden "die Messgrößen" genannt werden, sich diese auf die eine oder mehreren Messgrößen beziehen.

Die Messgrößen können in einem bestimmten Verhältnis zur mechanischen Spannung, die auf das induktive Bauteil wirkt, stehen, so dass in Kenntnis des Verhältnisses von den Messgrößen auf die mechanische Spannung geschlossen werden kann. Zum Bestimmen der mechanischen Spannung wird ein Prozessor herangezogen.

Eine solches Vorgehen kann gegenüber bekannten Vorgehen zur Sicherstellung der Vorspannung der Spule einen geringeren Arbeitsaufwand erfordern. Darüber hinaus können auf diese Weise Kosteneinsparungen und Zeiteinsparungen bei der Überprüfung des induktiven Bauteils erreicht werden.

Die auf das induktive Bauteil wirkende mechanische Spannung kann insbesondere kennzeichnend für Verschleißeffekte und/oder Deformationen/Verformungen des induktiven Bauteils sein. Mit dem Vorhergehenden beschriebenen Verfahren können daher insbesondere auch Verschleißeffekte und/oder Deformationen/Verformungen des induktiven Bauteils ermittelt werden. Verschleißeffekte sind zum Beispiel ein Abdampfen von Spulenmaterial einer Spule des induktiven Bauteils oder plastische Verformungen der Spule aufgrund thermischer Einflüsse im Betrieb der Spule.

Erfindungsgemäß umfassen die eine oder mehreren Messgrößen Schwingungsinformation über mechanische Schwingungen des induktiven Bauteils beim Anliegen des elektrischen Erregungssignals. Das Bestimmen der mechanischen Spannung ein Bestimmen der mechanischen Spannung anhand der Schwingungsinformation umfasst.

Die mechanischen Schwingungen des induktiven Bauteils sind zum Beispiel ein Effekt der Wechselwirkung des induktiven Bauteils mit dem von diesem erzeugten elektromagnetischen Feld. Die mechanischen Schwingungen können insbesondere von der mechanischen Spannung, die auf das induktive Bauteil wirkt, abhängen. Daher kann anhand der Schwingungsinformation über die mechanischen Schwingungen des induktiven Bauteils auf die mechanische Spannung geschlossen werden.

Die mechanischen Schwingungen können zum Erfassen der Schwingungsinformation bevorzugt kontaktlos und ohne Einflussnahme auf ein elektrisches Verhalten des induktiven Bauteils gemessen werden.

In manchen Ausführungsbeispielen umfassen die Schwingungsinformation zumindest eine Frequenz, ein Frequenzspektrum, eine Amplitude oder einen Ober- oder Unterton der mechanischen Schwingung.

Abhängig von der mechanischen Spannung kann die Frequenz, das Frequenzspektrum, die Amplitude und/oder ein durch die mechanischen Schwingungen des induktiven Bauteils erzeugter Oberton oder Unterton verschieden sein. Die mechanische Spannung kann daher anhand der Frequenz, des Frequenzspektrums, der Amplitude, des erzeugten Obertons und/oder des Untertons bestimmt werden.

Die mechanische Spannung wird anhand einer der vorhergehenden genannten Messgrößen bestimmt werden. Für eine genauere oder zuverlässigere Bestimmung der mechanischen Spannung kann optional eine Kombination dieser herangezogen werden.

In manchen Ausführungsbeispielen umfasst das Verfahren ein Erfassen der Schwingungsinformation anhand eines von dem induktiven Bauteil erzeugten Luftschalls.

Als Luftschall können im Kontext der vorliegenden Offenbarung insbesondere Schallwellen verstanden werden, die durch die mechanischen Schwingungen des induktiven Bauteils erzeugt werden und somit zum Beispiel charakteristisch für die Frequenz oder die Amplitude der mechanischen Schwingung des induktiven Bauteils sind.

Der Luftschall wird zum Ermitteln der Schwingungsinformation beispielsweise mit einem Schallwandler, wie zum Beispiel einem Mikrofon, gemessen.

Auf diese Weise kann die mechanische Spannung kontaktlos bestimmt werden.

In manchen Ausführungsbeispielen umfasst das Verfahren ein Erfassen der Schwingungsinformation anhand eines von dem induktiven Bauteil erzeugten Körperschalls.

Der Körperschall kann sich dabei auf einen Schall beziehen, welcher sich innerhalb des induktiven Bauteils oder einem anderen durch die Schwingung des induktiven Bauteils angeregten Körper ausbreitet. Der Körperschall ist somit zum Beispiel charakteristisch für die Frequenz oder die Amplitude der mechanischen Schwingung des induktiven Bauteils und kann zum Erfassen der Schwingungsinformation beispielsweise mittels eines elektromagnetischen, elektrodynamischen oder piezoelektrischen Tonabnehmers gemessen werden.

Das Erfassen der Schwingungsinformation anhand des von dem induktiven Bauteil erzeugten Körperschalls ist beispielsweise weniger störanfällig durch Störgeräusche als das Erfassen der Schwingungsinformation anhand des von dem induktiven Bauteil erzeugten Luftschalls.

In manchen Ausführungsbeispielen umfassen die eine oder mehreren von der mechanischen Spannung abhängigen Messgrößen eine elektrische Impedanz des induktiven Bauteils. Das Bestimmen der mechanischen Spannung kann ein Bestimmen der mechanischen Spannung anhand der elektrischen Impedanz umfassen.

Die Schwingungsinformation kann alternativ oder zusätzlich anhand des elektrischen Erregungssignals, wie zum Beispiel anhand einer elektrischen Spannung, eines elektrischen Stroms oder der sich daraus ergebenden elektrischen Impedanz des induktiven Bauteils ermittelt werden. Somit kann anhand der elektrischen Impedanz die mechanische Spannung, die auf das induktive Bauteil wirkt, ermittelt werden.

Die elektrische Impedanz wird beispielsweise anhand einer elektrischen Spannung und eines elektrischen Stroms des elektrischen Erregungssignals ermittelt. Zum Messen der elektrischen Impedanz können ein Strommessgerät und ein Spannungsmessgerät eingesetzt werden.

In manchen Anwendungsfällen können bereits entsprechende Messgeräte zum Ermitteln der elektrischen Spannung des elektrischen Stroms des elektrischen Erregungssignals vorgesehen sein, so dass gegenüber vorhergehend beschriebener Anwendungsbeispiele keine zusätzlichen Messgeräte, wie zum Beispiel zum Messen des Körperschalls oder Luftschalls, erforderlich sind.

Für eine höhere Zuverlässigkeit beim Bestimmen der auf das induktive Bauteil wirkenden mechanischen Spannung, kann diese optional anhand der elektrischen Impedanz und der Schwingungsinformation über mechanische Schwingungen des induktiven Bauteils bestimmt werden.

In manchen Ausführungsbeispielen umfasst das Bestimmen der mechanischen Spannung anhand der einen oder mehreren Messgrößen ein Bestimmen der mechanischen Spannung anhand eines Vergleichs des elektrischen Erregungssignals mit den ein oder mehreren Messgrößen.

Da ein Verhalten des induktiven Bauteils, beziehungsweise die Wechselwirkung des induktiven Bauteils mit dem erzeugten elektromagnetischen Feld, insbesondere von dem elektrischen Erregungssignal abhängig sein kann, kann es vorteilhaft sein die mechanischen Spannung anhand des Vergleichs der ein oder mehreren vorhergehend genannten Messgrößen mit dem elektrischen Erregungssignal zu ermitteln. Die mechanische Spannung kann beispielsweise anhand eines Verhältnisses einer Frequenz der elektrischen Spannung und/oder der Stromstärke des elektrischen Erregungssignals und der Frequenz der mechanischen Schwingungen des induktiven Bauteils ermittelt werden. Optional kann zum Bestimmen der mechanischen Spannung eine Amplitude der elektrischen Spannung und/oder der Stromstärke mit der Amplitude der mechanischen Schwingungen verglichen werden.

Auf diese Weise können Einflüsse des elektrischen Erregungssignals auf eine Bestimmung der mechanischen Spannung zumindest teilweise kompensiert werden.

In manchen Ausführungsbeispielen umfasst das Verfahren ferner ein Ermitteln einer oder mehrerer Einflussgrößen, welche die ein oder mehreren Messgrößen beim Anliegen des elektrischen Erregungssignals beeinflussen. Entsprechend kann das Bestimmen der mechanischen Spannung ein Bestimmen der mechanischen Spannung anhand der ein oder mehreren Einflussgrößen und der ein oder mehreren Messgrößen umfassen.

Die Einflussgrößen umfassen zum Beispiel eine Umgebungstemperatur, eine Luftfeuchtigkeit und/oder eine Temperatur des induktiven Bauteils. Solche Einflussgrößen können Einfluss auf mechanische und elektrische Eigenschaften des induktiven Bauteils und damit Einfluss auf die ein oder mehreren Messgrößen beim Anliegen des elektrischen Erregungssignals haben.

Zur zumindest teilweisen Kompensation eines Einflusses der Einflussgrößen und/oder zur Fehlerabschätzung beim Bestimmen der mechanischen Spannung, die auf das induktive Bauteil wirkt, können beim Bestimmen der mechanischen Spannung daher zusätzlich zu den von der mechanischen Spannung abhängigen Messgrößen die vorhergehend genannten Einflussgrößen herangezogen werden.

In manchen Ausführungsbeispielen umfasst das Verfahren ferner ein Ausbilden einer Datenverarbeitungsstruktur zum Bestimmen der auf das induktive Bauteil wirkenden mechanischen Spannung anhand der einen oder mehreren Messgrößen mittels maschinellem Lernen unter Verwendung der einen oder mehreren Messgrößen und einem oder mehreren Referenzwerten für die mechanische Spannung des induktiven Bauteils als Eingangsgrößen für das maschinelle Lernen.

Die Referenzwerte können in diesem Kontext als Trainingsdaten verstanden werden, anhand derer und der vorhergehend genannten Messgrößen als Eingangsgrößen die Datenverarbeitungsstruktur zum Beispiel mittels überwachten Lernens (supervised learning), teilüberwachten Lernens (semi-supervised learning), unüberwachten Lernens (unsupervised learning) oder bestärkenden Lernens (reinforcement learning) ein Modell oder einen Algorithmus zum Bestimmen der auf das induktive Bauteil wirkenden Spannung entwickeln kann.

Die Referenzwerte sind zum Beispiel Werte für die mechanische Spannung, welche mechanisch ermittelt wurden. Die Referenzwerte können zum Beispiel anhand von Drehmomenten von Schrauben abgeleitet werden, mit welchen die Windungen der Spule des induktiven Bauteils in der radialen Richtung vorgespannt sind.

Die Datenverarbeitungsstruktur kann zum Beispiel als ein Prozessor, ein Mikrocontroller oder jedwede weitere programmierbare Hardwarekomponente verstanden werden. Beim maschinellen Lernen kann eine Anpassung eines künstlichen neuronalen Netzes, welches durch die Datenverarbeitungsstruktur betrieben wird, angepasst werden.

Für den Fachmann versteht es sich, dass durch das maschinelle Lernen das vorhergehend genannte Modell speziell an Gegebenheiten eines gewünschten Anwendungsfall angepasst sein und somit genauere Ergebnisse für die mechanische Spannung, die auf das induktive Bauteil wirkt, liefern kann als ein beliebiges vorherbestimmtes Modell zum Bestimmen der mechanischen Spannung.

Erfindungsgemäß umfasst das induktive Bauteil zumindest eine Spule, auf welche die mechanische Spannung wirkt. Dementsprechend kann das Verfahren ein Erfassen der einen oder mehreren von der mechanischen Spannung abhängigen Messgrößen beim Anliegen des elektrischen Erregungssignals an der zumindest einen Spule umfassen. Ferner kann das Verfahren ein Bestimmen der auf die zumindest eine Spule wirkenden mechanischen Spannung anhand der einen oder mehreren erfassten Messgrößen.

Die Spule ist zum Beispiel als Induktionsspule oder als Transformatorspule ausgebildet und mittels Befestigungsmitteln unter einer mechanischen Vorspannung fixiert.

In manchen Ausführungsbeispielen ist die zumindest eine Spule ausgebildet, um beim Anliegen des elektrischen Erregungssignals an die zumindest eine Spule ein im Inneren der zumindest einen Spule angeordnetes Schmelzgut induktiv zu erwärmen.

Die Spule ist zum Beispiel als Induktionsspule eines Schmelzofens ausgeführt, welche um einen Schmelztiegel des Schmelzofens angeordnet und mittels Befestigungsmitteln unter mechanischer Vorspannung fixiert ist.

Bei unzureichender mechanischer Vorspannung der Induktionsspule kann ein mechanisches Verhalten der Induktionsspule beim Anliegen des elektrischen Erregungssignals zum Erwärmen des Schmelzgutes einen erhöhten Verschleiß des Schmelztiegels bewirken. Das im Vorhergehenden beschriebene Verfahren kann daher insbesondere zur Sicherstellung einer ausreichenden Vorspannung der Induktionsspule dienen, um einen Verschleiß des Schmelztiegels zu verringern.

In manchen Ausführungsbeispielen umfasst das Erfassen der einen oder mehreren Messgrößen ein Erfassen einer oder mehrerer erster Messwerte der einen oder mehreren Messgrößen zu einem ersten Zeitpunkt und ein Erfassen einer oder mehrerer zweiter Messwerte der einen oder mehreren Messgrößen zu einem zweiten Zeitpunkt und das Bestimmen der mechanischen Spannung ein Bestimmen der mechanischen Spannung anhand eines Vergleichs der einen oder mehreren ersten Messwerte mit den einen oder mehreren zweiten Messwerten umfassen.

Auf diese Weise kann ein zeitlicher Verlauf der auf das induktive Bauteil wirkenden mechanischen Spannung und somit zum Beispiel ein Zeitpunkt für eine Wartung ermittelt werden. In manchen Ausführungsbeispielen kann das Verfahren ferner ein Ermitteln eines Wartungsbedarfs des induktiven Bauteils und/oder einem oder mehreren mit dem induktiven Bauteil gekoppelten Elementen anhand der einen oder mehreren Messgrößen umfassen.

Anhand der vorhergehend genannten Messgrößen kann zum Beispiel eine Abweichung der mechanischen Spannung von einem Soll- oder Schwellenwert ermittelt werden, woraus sich ein Wartungsbedarf des induktiven Bauteils ergibt. Der daraus ermittelte Wartungsbedarf gibt zum Beispiel an, ob das induktive Bauteil oder mit dem Bauteil zusammenwirkende Elemente ausgetauscht oder gewartet werden müssen.

Gemäß einem weiteren Aspekt beziehen sich Ausführungsbeispiele vorliegender Offenbarung auf eine Vorrichtung zum Überprüfen einer mechanischen Spannung eines induktiven Bauteils. Die Vorrichtung umfasst einen oder mehrere Sensoren zum Erfassen einer oder mehrerer von der mechanischen Spannung abhängiger Messgrößen beim Anliegen eines elektrischen Erregungssignals an dem induktiven Bauteil. Zudem umfasst die Vorrichtung zumindest einen Prozessor zum Bestimmen der auf das induktive Bauteil wirkenden mechanischen Spannung anhand der einen oder mehreren erfassten Messgrößen.

Wie vorhergehend beschrieben können die ein oder mehreren Sensoren einen Schallwandler, ein Mikrofon, einen Tonabnehmer, ein Strommessgerät und/oder ein Spannungsmessgerät umfassen, um die ein oder mehreren Messgrößen, beziehungsweise Werte für die ein oder mehreren Messgrößen zu ermitteln.

Es sei ferner darauf hingewiesen, dass, falls im Folgenden "die Sensoren" genannt werden, sich diese auf die eine oder mehreren Sensoren beziehen.

Die Sensoren können drahtlos oder drahtgebunden mit dem zumindest einen Prozessor gekoppelt sein, um die erfassten Messgrößen zum Bestimmen der auf das induktive Bauteil wirkenden mechanischen Spannung an den Prozessor zu übermitteln.

Unter dem Prozessor ist zum Beispiel eine zentrale Verarbeitungseinheit (ZVE, englisch "central processing unit", CPU), ein Mikrocontroller, ein integrierter Schaltkreis, eine anwendungsspezifische integrierte Schaltung (englisch "application-specific integrated circuit", ASIC) oder jedwede programmierbare Hardware zu verstehen.

Der Prozessor kann ausgebildet sein, um die auf das induktive Bauteil wirkende Spannung aus einer Beziehung oder einem Verhältnis der Messgrößen zu der mechanischen Spannung zu ermitteln.

Erfindungsgemäß umfassen die eine oder mehreren Messgrößen Schwingungsinformation über mechanische Schwingungen des induktiven Bauteils beim Anliegen des elektrischen Erregungssignals. Entsprechend kann der zumindest eine Prozessor ausgebildet sein, um die mechanische Spannung anhand der Schwingungsinformation zu bestimmen.

Die Schwingungsinformation kann wie vorhergehend beschrieben zumindest eine Frequenz, ein Frequenzspektrum, eine Amplitude oder einen Ober- oder Unterton der mechanischen Schwingung umfassen.

In manchen Ausführungsbeispielen umfassen die eine oder mehreren von der mechanischen Spannung abhängigen Messgrößen eine elektrische Impedanz des induktiven Bauteils. Entsprechend kann der zumindest eine Prozessor ausgebildet sein, um die mechanische Spannung anhand der elektrischen Impedanz zu bestimmen.

Wie vorhergehend beschrieben, kann die elektrische Impedanz anhand einer elektrischen Spannung und eines elektrischen Stroms des elektrischen Erregungssignals ermittelt werden. Es sei darauf hingewiesen, dass Merkmale, die vorhergehend im Zusammenhang mit dem Verfahren genannt wurden mutatis mutandis auf das Computerprogramm und/oder die Vorrichtung übertragbar sind, und umgekehrt.

### Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:
- Fig. 1: ein Flussdiagramm zur schematischen Darstellung eines Verfahrens zur Überprüfung einer auf ein induktives Bauteil wirkenden mechanischen Spannung;
- Fig. 2a: eine schematische Darstellung einer Spule in einer Seitenansicht und auf die Spule wirkende axiale Kräfte;
- Fig. 2b: eine schematische Darstellung einer Spule in einer Draufsicht und auf die Spule wirkende radiale Kräfte;
- Fig. 3: eine Messung mechanischer Schwingungen des induktiven Bauteils;
- Fig. 4a: ein Blockdiagramm zur schematischen Darstellung eines Vorgehens zum Erhalten von Messgrößen zum Bestimmen der auf das induktive Bauteil wirkenden mechanischen Spannung;
- Fig. 4b: ein Blockdiagramm zur Darstellung einer Einbeziehung von Einflussgrößen beim Bestimmen der mechanischen Spannung;
- Fig. 5a: ein Diagramm zur Darstellung eines Frequenzspektrums mechanischer Schwingungen des induktiven Bauteils;
- Fig. 5b: eine Analyse des Frequenzspektrums;
- Fig. 5c: eine Bestimmung eines Grundtons anhand des Frequenzspektrums;
- Fig. 5d: eine Bestimmung eines Grundtons und der Obertöne dieses Grundtons;
- Fig. 6: ein Diagramm zur Darstellung eines zeitlichen Verlaufs mehrerer zeitlich aufeinanderfolgender Frequenzspektren der mechanischen Schwingungen des induktiven Bauteils; und
- Fig. 7: eine Vorrichtung zur Überprüfung der auf das induktive Bauteil wirkenden mechanischen Spannung.

### Beschreibung

Verschiedene Beispiele werden nun ausführlicher Bezug nehmend auf die beiliegenden Figuren beschrieben, in denen einige Beispiele dargestellt sind. In den Figuren können die Stärken von Linien, Schichten und/oder Bereichen zur Verdeutlichung übertrieben sein.

Während sich weitere Beispiele für verschiedene Modifikationen und alternative Formen eignen, sind dementsprechend einige bestimmte Beispiele derselben in den Figuren gezeigt und werden nachfolgend ausführlich beschrieben. Allerdings beschränkt diese detaillierte Beschreibung weitere Beispiele nicht auf die beschriebenen bestimmten Formen. Weitere Beispiele können alle Modifikationen, Entsprechungen und Alternativen abdecken, die in den Rahmen der Offenbarung fallen. Gleiche oder ähnliche Bezugszeichen beziehen sich in der gesamten Beschreibung der Figuren auf gleiche oder ähnliche Elemente, die bei einem Vergleich miteinander identisch oder in modifizierter Form implementiert sein können, während sie die gleiche oder eine ähnliche Funktion bereitstellen.

Es versteht sich, dass, wenn ein Element als mit einem anderen Element "verbunden" oder "gekoppelt" bezeichnet wird, die Elemente direkt, oder über ein oder mehrere Zwischenelemente, verbunden oder gekoppelt sein können. Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht explizit oder implizit anders definiert. Eine alternative Formulierung für die gleichen Kombinationen ist "zumindest eines von A und B" oder "A und/oder B". Das Gleiche gilt, mutatis mutandis, für Kombinationen von mehr als zwei Elementen.

Die Terminologie, die hier zum Beschreiben bestimmter Beispiele verwendet wird, soll nicht begrenzend für weitere Beispiele sein. Wenn eine Singularform, z. B. "ein, eine" und "der, die, das" verwendet wird und die Verwendung nur eines einzelnen Elements weder explizit noch implizit als verpflichtend definiert ist, können weitere Beispiele auch Pluralelemente verwenden, um die gleiche Funktion zu implementieren. Wenn eine Funktion nachfolgend als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei Gebrauch das Vorhandensein der angegebenen Merkmale, Ganzzahlen, Schritte, Operationen, Prozesse, Elemente, Komponenten und/oder einer Gruppe derselben präzisieren, aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Sofern nicht anderweitig definiert, werden alle Begriffe (einschließlich technischer und wissenschaftlicher Begriffe) hier in ihrer üblichen Bedeutung auf dem Gebiet verwendet, zu dem Beispiele gehören.

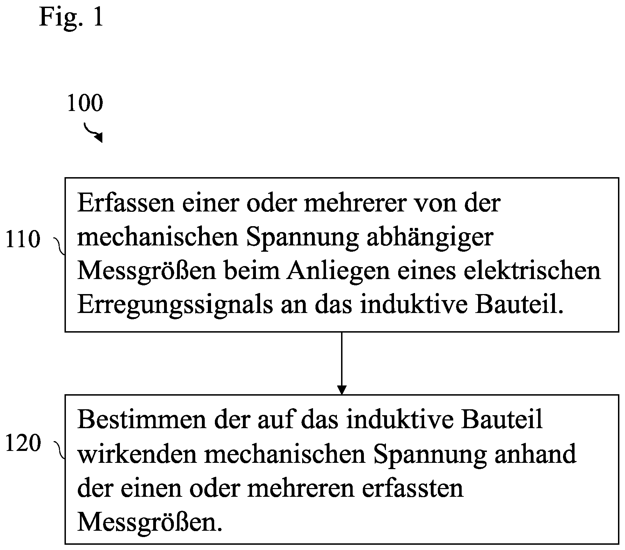

Fig. 1 zeigt ein Flussdiagramm zur schematischen Darstellung eines Verfahrens 100 zur Überprüfung einer mechanischen Spannung, welche auf ein induktives Bauteil wirkt.

Das Verfahren 100 umfasst ein Erfassen 110 einer oder mehrere von der mechanischen Spannung abhängiger Messgrößen beim Anliegen eines elektrischen Erregungssignals an das induktive Bauteil.

Zudem umfasst das Verfahren 100 ein Bestimmen 120 der auf das induktive Bauteil wirkenden mechanischen Spannung anhand der einen oder mehreren erfassten Messgrößen.

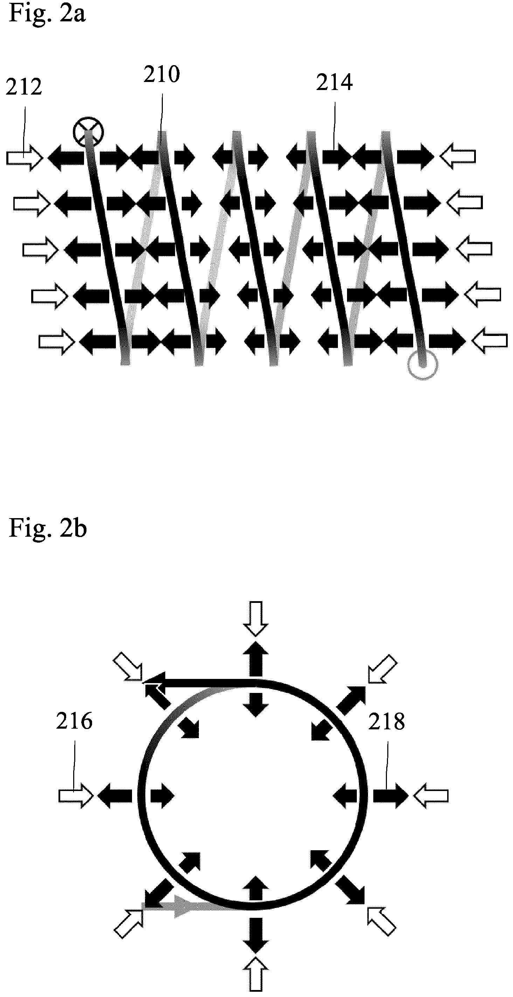

Das induktive Bauteil umfasst, wie in Fig. 2a und 2b gezeigt, zum Beispiel eine Spule 210. Beim Anliegen des elektrischen Erregungssignals können in axialer Richtung wirkende (intrinsische/intern entstehende) Aufweitungskräfte 214 entgegen in der axialen Richtung wirkender Vorspannkräfte 212 auf die Spule 210 wirken. Zudem können beim Anliegen des elektrischen Erregungssignals in radialer Richtung nach außen wirkende (intrinsische/intern entstehende) Aufweitungskräfte 218 entgegen in der radialen Richtung nach innen wirkenden Vorspannkräften 216 auf die Spule 210 wirken.

Zum Abstützen der Spule 210 entgegen der Kräfte 214 und/oder 218 kann die Spule 210 mit der mechanischen Spannung in der axialen und/oder der radialen Richtung vorgespannt sein. Dazu ist die Spule 210 zum Beispiel mit Schrauben oder Bolzen zwischen radial außerhalb oder innerhalb der Spule 210 liegenden Ankern (Betonanker) mit der mechanischen Spannung/Vorspannung eingespannt.

Wie vorhergehend beschrieben kann es zum Bestimmen eines Wartungsbedarfs und/oder eines Verschleißes der Spule 210 gewünscht sein die mechanische Spannung/Vorspannung der Spule 210 zu überprüfen/überwachen.

Das Verfahren 100 erlaubt eine sensorgestützte und/oder automatische Überwachung der mechanischen Spannung.

Zum Erfassen der von der mechanischen Spannung abhängigen Messgrößen können von der Spule 210 ausgesendete mechanische Schwingungen, beziehungsweise Schwingungsinformation der mechanischen Schwingungen messtechnisch erfasst werden. Die Schwingungsinformation kann zumindest einen Teil der von der mechanischen Spannung abhängigen Messgrößen enthalten und zum Beispiel anhand eines Körperschalls oder Luftschalls erfasst werden, welches beim Anliegen eines elektrischen Erregungssignals an der Spule 210 von dieser erzeugt wird.

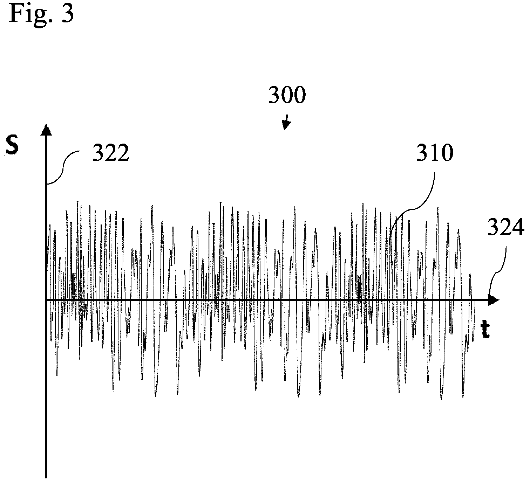

Fig. 3 zeigt beispielhaft ein Diagramm 300 Messsignal 310 bei einer Messung der mechanischen Schwingungen der Spule 210. Das Messsignal 310 ist gegenüber einer Achse 322 zur Angabe einer Amplitude S des gemessenen Körperschalls oder Luftschalls und einer Zeitachse 324 zur Angabe einer Zeit t aufgetragen. Das Messsignal 310 kann dazu dienen Schwingungsinformation oder sogenannte "Frequenzinhalte, wie zum Beispiel eine Frequenz, eine Amplitude, ein Frequenzspektrum und/oder Unter- und/oder Obertöne der mechanischen Schwingungen der Spule 210 zu ermitteln, welche insbesondere von der auf die Spule 210 wirkende mechanischen Spannung abhängig sind und somit als Messgrößen zum Bestimmen der mechanischen Spannung herangezogen werden können.

Neben dem von der Spule 210 erzeugten Körperschall und/oder Luftschall kann die Schwingungsinformation anhand eines Erregungsmechanismus der Spule 210 erfasst werden. Der Erregungsmechanismus umfasst beispielsweise das Zuführen von elektrischer Energie in Form des elektrischen Erregungssignals zur Spule 210 - die Frequenzinhalte/Schwingungsinformation können daher aus elektrischen Größen wie einer an der Spule 210 anliegenden elektrischen Spannung und elektrischen Strom des elektrischen Erregungssignals abgeleitet werden. Dementsprechend können die elektrische Spannung, der elektrische Strom des elektrischen Erregungssignals oder die sich aus der elektrischen Spannung und den elektrischen Strom ergebende elektrische Impedanz der Spule 210 um Ermitteln der mechanischen Spannung herangezogen werden.

Zudem ist die elektrische Impedanz kennzeichnend für eine von einem (von Form und Durchmesser der Spule 210 abhängigen) Querschnitt der Spule 210 abhängigen Induktivität. Somit können anhand der Impedanz Änderungen des Querschnitts aufgrund veränderter mechanischer Spannung und damit die auf die Spule 210 wirkende mechanische Spannung ermittelt werden.

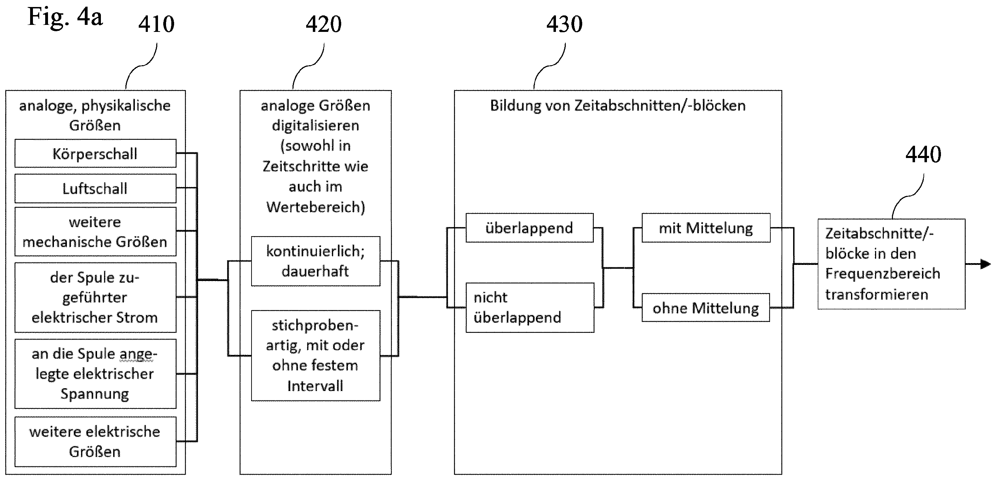

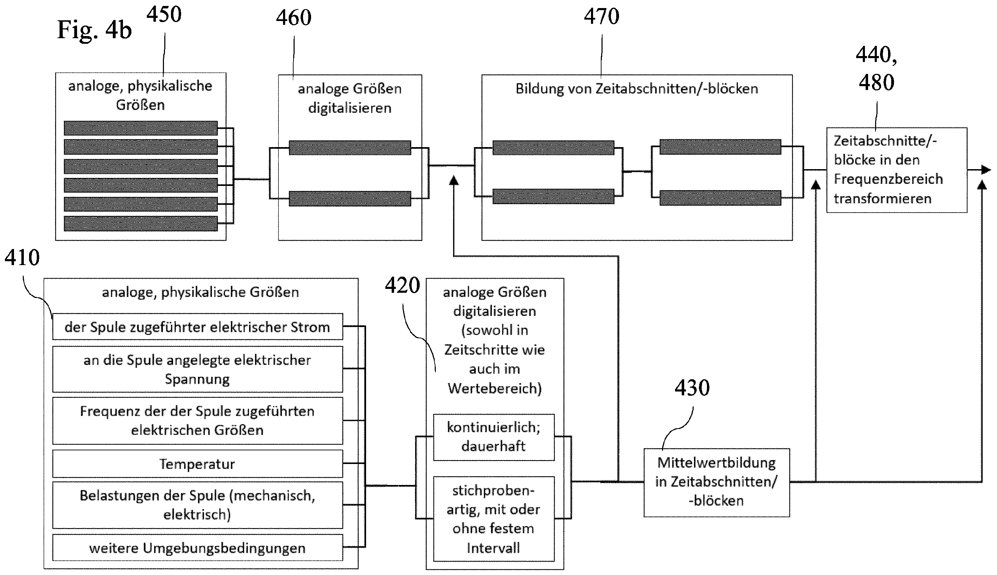

Die elektrische Impedanz und die Schwingungsinformation kann auf einem elektronischen Datenspeicher gespeichert und mit einem dazu ausgebildeten Prozessor hinsichtlich der Frequenzinhalte der mechanischen Schwingungen analysiert werden. Eine Erfassung, Speicherung der mechanischen Schwingungen und eine Weiterverarbeitung/Aufbereitung der Frequenzinhalte (z. B. in Form von Frequenzspektren) kann, wie nachfolgend in Bezug auf Fig. 4a und Fig. 4b beschrieben ist, stichprobenartig, in festen (evtl. auch überlappenden) Intervallen oder kontinuierlich/andauernd erfolgen.

Fig. 4a zeigt ein Blockdiagramm zur schematischen Darstellung eines Vorgehens zum Erhalten der Messgrößen (zum Beispiel die vorhergehend genannten Schwingungsinformation), welche zum Bestimmen der auf das induktive Bauteil wirkenden mechanischen Spannung geeignet sind.

Dieses Vorgehen sieht ein Erfassen 410 analoger Messsignale vor, aus welchen die Messgrößen ermittelt werden können.

Zum Digitalisieren 420 können die Messsignale in einem Analog-Digital-Umsetzer umgesetzt werden. Die eingespeisten Messsignale können entweder dauerhaft/kontinuierlich oder stichprobenartig in einem festen oder variablen Zeitintervall digitalisiert werden. Bei einer kontinuierlichen Digitalisierung erfolgt beispielsweise eine Digitalisierung der Messsignale über einen gesamten oder teilweisen Zeitraum der Messignale. Bei einer stichprobenartigen Digitalisierung erfolgt beispielsweise eine Digitalisierung einzelner Messwerte der Messsignale. Das Digitalisieren 420 umfasst "eine Diskretisierung" der Messsignale im Werte-, sowie auch im Zeitbereich.

In einem weiteren Schritt erfolgt ein Zuordnen 430 von Teilen der digitalisierten Messsignale, beziehungsweise der digitalisierten Messwerte zu jeweils einzelnen Zeitabschnitten oder Zeitblöcken, welche entweder miteinander überlappen oder nicht. Optional kann ein Mittelwert der Messwerte, beziehungsweise der Teile der digitalisierten Messsignale, welche dem gleichen Zeitabschnitt zugeordnet sind, gebildet werden.

Mit den vorhergehenden Schritten aufbereitete (Teile der) Messsignale, Mittelwerte oder Messwerte der Messignale, welche die mechanischen Schwingungen der Spule 210 charakterisieren, können durch eine anschließende Transformation 440 in den Frequenzbereich transformiert werden. Die Transformation 440 umfasst beispielsweise eine Fourier-Transformation. Die Messgrößen, wie zum Beispiel eine gemessene Amplitude der mechanischen Schwingungen der Spule 210, können somit im Frequenzbereich dargestellt und, wie später noch erläutert, analysiert werden.

Fig. 4b zeigt ein Blockdiagramm, welches neben einer schematischen Darstellung der Schritte 410, 420 und 430, schematisch ein Erfassen 450 analoger Messignale, aus welchen Einflussgrößen ermittelt werden können, darstellt. Die Einflussgrößen haben zum Beispiel Einfluss auf physikalische Eigenschaften der Spule 210 und/oder charakterisieren Störeinflüsse beim Erfassen der Messgrößen und haben somit Einfluss auf die zum Bestimmen der mechanischen Spannung erfassten Messgrößen.

Die Einflussgrößen umfassen zum Beispiel eine Umgebungstemperatur, eine Luftfeuchtigkeit und/oder Störgeräusche, welche beispielsweise das Erfassen des von der Spule 210 erzeugten Luftschalls stören.

Die Messignale der Einflussgrößen können bei einem in Fig. 4b gezeigten Verfahrensschritt 460 analog zum Digitalisieren 420 der Messgrößen digitalisiert, in einem weiteren Verfahrensschritt 470 Zeitabschnitten oder Zeitblöcken zugeordnet und optional in einem darauffolgenden Verfahrensschritt 480 in den Frequenzbereich transformiert werden.

Wie in Fig. 4b gezeigte Pfeile darstellen, können Ergebnisse der Verfahrensschritte 460, 470 und 480 zum Aufbereiten/Erhalten der Einflussgrößen mit entsprechenden Ergebnissen der Schritte 420, 430 oder 440 zum Aufbereiten der Messgrößen kombiniert oder zusammengeführt werden, um den Einfluss der Einflussgrößen auf die Messgrößen zumindest teilweise zu kompensieren.

Beispielsweise kann ein sich aus Verfahrensschritt 480 ergeben des Frequenzspektrum von Störgeräuschen von einem aus dem Messsignal 310 erhaltenen Frequenzspektrum der mechanischen Schwingungen der Spule 210 subtrahiert werden, um eine Störung durch die Störgeräusche zumindest teilweise zu kompensieren.

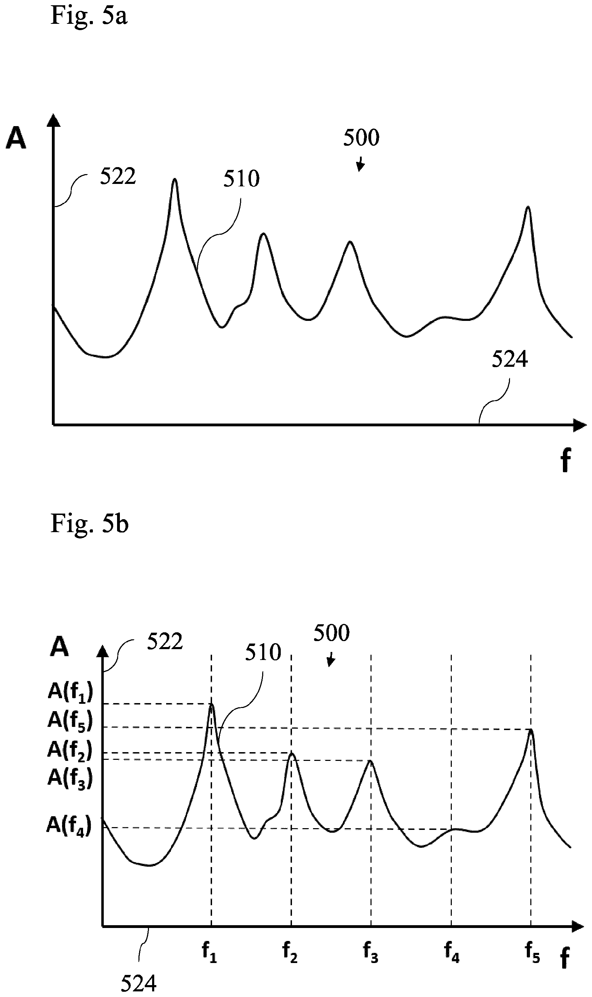

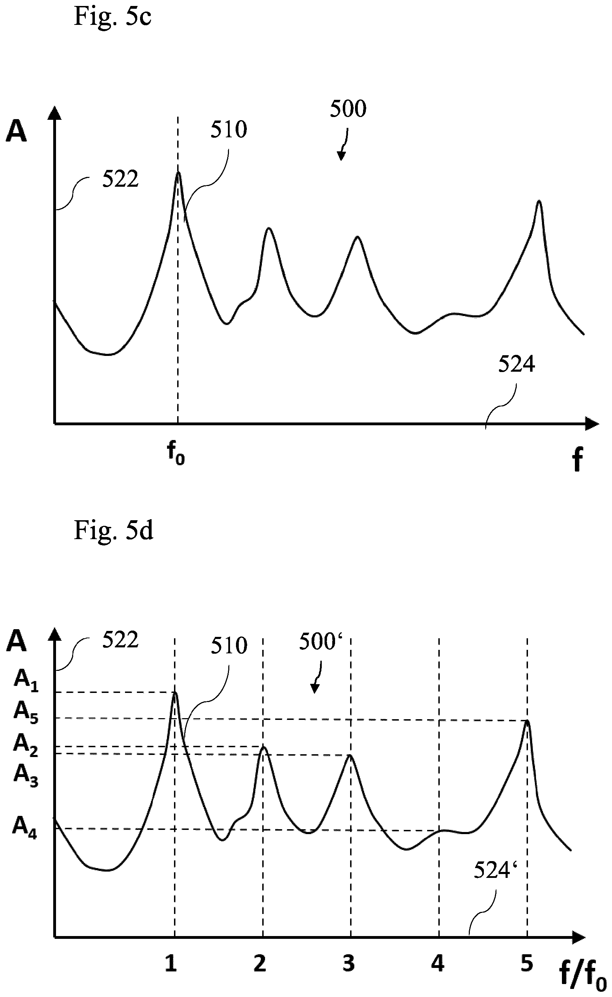

Wie nachfolgend anhand von Fig. 5a bis Fig. 5d gezeigt, können die Frequenzinhalte/Schwingungsinformation anschließend hinsichtlich hervortretender Teile der Frequenzinhalte (zum Beispiel Töne und/oder deren Obertöne/Untertöne) analysiert werden. Dazu werden Messgrößen wie zum Beispiel Frequenz oder Amplitude der mechanischen Schwingungen der Spule 210 erfasst und gespeichert. Durch Bildung von Verhältnissen zwischen Amplituden verschiedener hervortretender Töne und/oder Obertöne können Größen bestimmt werden, die einen Teil eines aktuellen strukturdynamischen Eigenverhaltens der Spule 210 und gegebenenfalls mit der Spule 210 zusammenwirkender Bauteile wiedergeben. Etwaige Veränderungen des strukturdynamischen Eigenverhaltens (zum Beispiel durch Änderung der Vorspannung) oder deren Ausbleiben lassen sich, wie in Fig. 5d dargestellt, mittels eines Vergleichs zweier oder mehrerer solcher Messungen/Analysen erkennen.

Fig. 5a, 5b und 5c zeigen ein Diagramm 500 mit einer Achse 522 zur Angabe einer gemessenen Schwingungsamplitude A und einer Achse 524 zur Angabe einer gemessenen Frequenz der mechanischen Schwingungen der Spule 210. Das Diagramm 500 stellt ein digitales Frequenzspektrum 510 der mechanischen Schwingungen der Spule 210 dar, welches unter Anwendung der vorhergehend genannten Schritte 410, 420, 430 und 440 aus dem Messsignal 310 ermittelt wurde.

Anhand des Frequenzspektrums 510 werden zum Beispiel mittels eines Algorithmus oder eines Computerprogramms Frequenzen f₁,..., f₅ ermittelt, bei denen das Frequenzspektrum 510 lokale Maxima A(f₁),..., A(f₅) annimmt. Die Frequenzen f₁,..., f₅ können insbesondere einen durch die mechanischen Schwingungen erzeugten Grundton, einen Oberton (sog. "Harmonische") und/oder einen Unterton (sog. "Subharmonische") angeben.

Zum Bestimmen der mechanischen Spannung kann das gesamte Frequenzspektrum 510 und/oder die lokalen Maxima A(f₁),..., A(f₅) mit einem als Referenz dienenden Frequenzspektrum und/oder dessen lokalen Maxima verglichen werden, welches in Kenntnis der auf die Spule 210 wirkenden mechanischen Spannung erfasst wurde.

Das als Referenz dienende Frequenzspektrum der Spule 210 wird beispielsweise nach Einstellen einer bestimmten auf die Spule 210 wirkende mechanischen Spannung anhand des von der Spule 210 erzeugten Körperschalls oder Luftschalls beim Anliegen des elektrischen Erregungssignals erfasst. Zum Einstellen der bestimmten mechanischen Spannung werden zum Beispiel Schrauben, die dem mechanischen Vorspannen der Spule 210 dienen, mit einem vorbestimmten Drehmoment angezogen.

Wie anhand Fig. 5c zu sehen ist, gibt das lokale Maximum A(f₁) beispielsweise einen Grundton der mechanischen Schwingung mit Frequenz f₀ an.

Fig. 5d zeigt ein Diagramm 500', in welchem das Frequenzspektrum 510 gegenüber der Achse 522 zur Angabe der gemessenen Schwingungsamplitude und gegenüber einer Achse 524' zur Angabe der gemessenen Frequenz im Verhältnis zur Frequenz f₀ des Grundtons aufgetragen ist. Aus dem Diagramm 500' ergibt sich, dass die Frequenzen f₁,..., f₅ der lokalen Maxima A(f₁)/A₁,..., A(f₅)/A₅ ganzzahligen Teilern 1,..., 5 der Frequenz f₀ des Grundtons entsprechen. Die lokalen Maxima A₂, ..., A₅, beziehungsweise deren Frequenzen f₂,..., f₅ geben somit Untertöne/Subharmonische zum Grundton mit der Frequenz f₀ an. Umgekehrt können die lokalen Maxima A₁,..., A₄, beziehungsweise als Obertöne/Harmonische zum Unterton des lokalen Maximums A₅ angesehen werden.

Dementsprechend kann die mechanische Spannung insbesondere aus Werten und/oder Verhältnissen des Grundtons und/oder der Untertöne und/oder der Obertöne ermittelt werden.

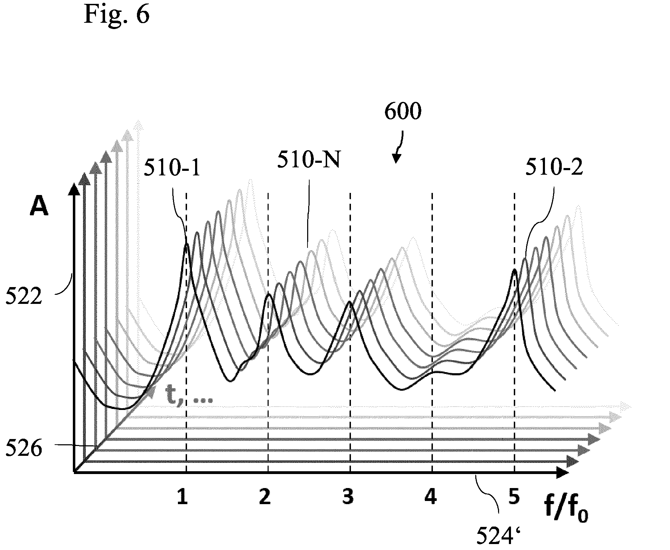

Fig. 6 zeigt ein Diagramm 600, in welchem mehrere solcher Frequenzspektren 510-1, 510-2, ..., 510-N, welche zeitlich aufeinanderfolgend erfasst wurden, gegenüber der Achsen 522, 524' und gegenüber einer Achse 526 zur Angabe einer Zeit t, bei welcher die Frequenzspektren 510-1, 510-2, ..., 510-N erfasst wurden, aufgetragen sind. Das Diagramm 600 stellt somit einen zeitlichen Verlauf der mechanischen Schwingungen der Spule 210 dar. Das Diagramm 600 kann auch als "Spektrogramm" bezeichnet werden.

Anhand der Frequenzspektren 510-1, 510-2, ..., 510-N oder anhand von Abweichungen der Frequenzspektren 510-1, 510-2, ..., 510-N kann daher eine zeitliche Veränderung der mechanischen Spannung der Spule 210 ermittelt werden.

Das Verfahren 100 eignet sich daher, insbesondere in Form des Vorhergehenden beschriebenen Ausführungsbeispiels, dazu, um (zeitliche) strukturdynamische Veränderungen zu erkennen/bestimmen, die mit einer oder mehreren der folgenden Ursachen und/oder Auswirkungen in Zusammenhang steht:
- Veränderungen (bis zum Verlust) der mechanischen Spannung/ Vorspannung eines induktiven Bauteils, wie zum Beispiel der Spule 210, welche zum Beispiel durch Anlage des induktiven Bauteils auf einem oder mehreren Anlagenelementen geschaffen wird;
- Veränderung einer Wandstärke der ein oder mehreren Anlagenelementen;
- Veränderung von Schichtdicken verschiedener interner Schichten der einen oder mehreren Anlagenelemente; und
- Veränderung von Steifigkeit und/oder Dämpfung der ein oder mehreren Anlagenelemente.

Das Verfahren 100 kann daher auch als messtechnisches Verfahren zur Bewertung der mechanischen Vorspannung von Komponenten in Betrieb befindlicher Maschinen verstanden werden.

Bei Anwendungsbeispielen der Spule 210 als Induktionsspule in einem Schmelzofen sind unter den ein oder mehreren Anlageelementen zum Beispiel Anker zu verstehen, zwischen welchen die Induktionsspule eingespannt ist, und/oder ein Schmelztiegel, um welchen die Induktionsspule angeordnet ist.

In manchen Ausführungsbeispielen kann das Bestimmen der mechanischen Spannung bei unterschiedlichen anliegenden elektrischen Erregungssignalen erfolgen. Die unterschiedlichen elektrischen Erregungssignale weisen zum Beispiel eine unterschiedliche Frequenz der anliegenden elektrischen Spannung auf. Dadurch kann ein Einfluss des elektrischen Erregungssignals beim Bestimmen der mechanischen Spannung zumindest teilweise reduziert werden.

Das vorhergehend beschriebene Verfahren ermöglicht eine erhöhte Betriebssicherheit sowie eine effizientere Ausnutzung von Standzeiten/Lebensdauern der Spule 210 und mit der Spule 210 zusammenwirkenden Komponenten.

Das Verfahren 100 ist beispielsweise geeignet zur Erkennung strukturdynamischer Veränderungen induktiver Bauteile und/oder damit (mechanisch) gekoppelter Komponenten. Wie oben beschrieben kann das induktive Bauteil eine Induktionsspule eines Schmelzofens/Induktionsofens sein. Die mit der Induktionsspule (mechanisch) gekoppelten Komponenten umfassen insbesondere Anker zum Vorspannen der Induktionsspule und den innerhalb der Induktionsspule angeordneten Schmelztiegel.

Alternativ kann das Verfahren 100 zum Ermitteln strukturdynamischer Eigenschaften in weiteren Anwendungen/Anwendungsbeispielen, in denen ein oder mehrere induktive Bauteile eingesetzt werden, angewendet werden. Weitere Anwendungen/Anwendungsbeispiele umfassen:
- Maschinen- und Anlagenbau:
   o induktives Härten
   o elektrische Antriebe inkl. Linearantriebe
   o Generatoren
   o Transformatoren
   o (geschaltet) Elektromagnete
   o Magnetlager
   o Computertomographie (CT)
   o Metalldetektoren
   o elektrodynamische Shaker
   o Teilchenbeschleuniger:
      □ mit geradliniger Beschleunigung; oder
      □ mit zyklischer Beschleunigung (auf spiralartiger oder rosettenförmiger oder ringförmig geschlossener Bahn)
      □ in Anlagen für:
         - Strahlensterilisation
         - Lebensmittelbestrahlung
         - Elektronenstrahlschweißen
         - Röntgenlithographie
         - Elektronenstrahllithographie
         - die Durchstrahlungsprüfung
      □ in Massenspektrometern
- Medizintechnik
   o Magnetresonanztomographie
   o Computertomographie (CT)
   o Teilchenbeschleuniger in Anlagen für die Strahlentherapie
   o Anlagen für die Magnetfeldtherapie
- Transport:
   o elektrische Antriebe inkl. Linearantriebe
   o elektromagnetische Schwebesysteme
   o elektrodynamische Schwebesystem
- Wehrtechnik:
   o Gaußkanone/-gewehr
   o Railgun (genauer Electromagnetic Railgun/EMRG, dt. Schienengewehr oder Schienenkanone)

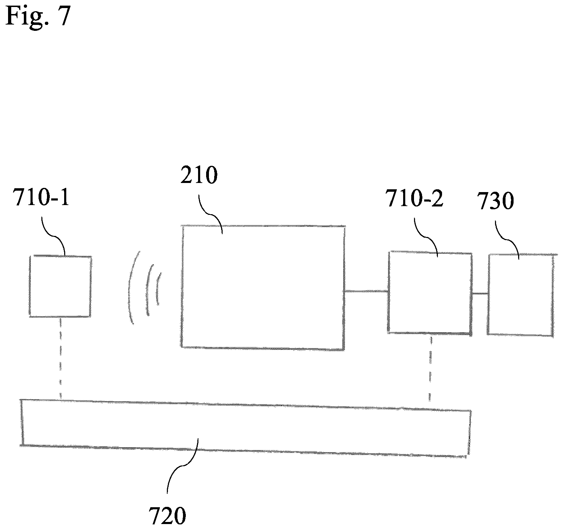

Fig. 7 zeigt eine Vorrichtung, welche zum Ausführen des vorhergehend beschriebenen Verfahrens 100 zum Überprüfen der mechanischen Spannung eines induktiven Bauteils ausgebildet ist. Die Vorrichtung umfasst Sensoren 710-1 und 710-2 zum Erfassen der von der mechanischen Spannung abhängigen Messgrößen beim Anliegen des elektrischen Erregungssignals an dem induktiven Bauteil, welches in dem gezeigten Beispiel die Spule 210 umfasst. Zudem umfasst die Vorrichtung einen Prozessor 720 zum Bestimmen der auf die Spule 210 wirkenden mechanischen Spannung anhand der erfassten Messgrößen.

Das elektrische Erregungssignal wird mittels eines mit der Spule 210 gekoppelten Signalgenerators 730 an der Spule 210 angelegt.

Der Sensor 710-1 ist beispielsweise ein Mikrofon, welches geeignet ist einen von der Spule 210 erzeugten Luftschall beim Anliegen des elektrischen Erregungssignals zu messen, um Schwingungsinformation über die mechanischen Schwingungen der Spule 210 anhand des gemessenen Luftschalls zu erfassen.

Der Sensor 710-2 umfasst beispielsweise ein Strommessgerät und ein Spannungsmessgerät zur Bestimmung einer elektrischen Impedanz der Spule 210 anhand des elektrischen Erregungssignals.

Die Sensoren 710-1 und 710-2 sind mit dem Prozessor 720 gekoppelt, um die Schwingungsinformation und die gemessene elektrische Impedanz an den Prozessor 720 zu übertragen. Der Prozessor 720 kann ausgebildet sein, um, wie vorhergehend beschrieben, anhand der Schwingungsinformation und/oder anhand der elektrischen Impedanz die auf die Spule 210 wirkende mechanische Spannung zu bestimmen. Dazu kann der Prozessor 720 ein hierfür angepasstes Computerprogramm ausführen, welches mit der Schwingungsinformation und der gemessenen elektrischen Impedanz als Eingangswerte die mechanische Spannung, die auf das induktive Bauteil wirkt, zumindest im Rahmen von Messungenauigkeiten und/oder Messfehlern ermitteln kann.

Die Aspekte und Merkmale, die zusammen mit einem oder mehreren der vorher detaillierten Beispiele und Figuren beschrieben sind, können auch mit einem oder mehreren der anderen Beispiele kombiniert werden, um ein gleiches Merkmal des anderen Beispiels zu ersetzen oder um das Merkmal in das andere Beispiel zusätzlich einzuführen.

Beispiele können weiterhin ein Computerprogramm mit einem Programmcode zum Ausführen eines oder mehrerer der obigen Verfahren sein oder sich darauf beziehen, wenn das Computerprogramm auf einem Computer oder Prozessor ausgeführt wird. Schritte, Operationen oder Prozesse von verschiedenen, oben beschriebenen Verfahren können durch programmierte Computer oder Prozessoren ausgeführt werden. Beispiele können auch Programmspeichervorrichtungen, z. B. Digitaldatenspeichermedien, abdecken, die maschinen-, prozessor- oder computerlesbar sind und maschinenausführbare, prozessorausführbare oder computerausführbare Programme von Anweisungen codieren. Die Anweisungen führen einige oder alle der Schritte der oben beschriebenen Verfahren aus oder verursachen deren Ausführung. Die Programmspeichervorrichtungen können z. B. Digitalspeicher, magnetische Speichermedien wie beispielsweise Magnetplatten und Magnetbänder, Festplattenlaufwerke oder optisch lesbare Digitaldatenspeichermedien umfassen oder sein. Weitere Beispiele können auch Computer, Prozessoren oder Steuereinheiten, die zum Ausführen der Schritte der oben beschriebenen Verfahren programmiert sind, oder (feld-)programmierbare Logik-Arrays ((F)PLAs = (Field) Programmable Logic Arrays) oder (feld-)programmierbare Gate-Arrays ((F)PGA = (Field) Programmable Gate Arrays), die zum Ausführen der Schritte der oben beschriebenen Verfahren programmiert sind, abdecken.

Durch die Beschreibung und Zeichnungen werden nur die Grundsätze der Offenbarung dargestellt. Weiterhin sollen alle hier aufgeführten Beispiele grundsätzlich ausdrücklich nur illustrativen Zwecken dienen, um den Leser beim Verständnis der Grundsätze der Offenbarung und der durch den (die) Erfinder beigetragenen Konzepte zur Weiterentwicklung der Technik zu unterstützen. Alle hiesigen Aussagen über Grundsätze, Aspekte und Beispiele der Offenbarung sowie konkrete Beispiele derselben umfassen deren Entsprechungen.

Ein als "Mittel zum..." Ausführen einer bestimmten Funktion bezeichneter Funktionsblock kann sich auf eine Schaltung beziehen, die ausgebildet ist zum Ausführen einer bestimmten Funktion. Somit kann ein "Mittel für etwas" als ein "Mittel ausgebildet für oder geeignet für etwas" implementiert sein, z. B. ein Bauelement oder eine Schaltung ausgebildet für oder geeignet für die jeweilige Aufgabe.

Funktionen verschiedener in den Figuren gezeigter Elemente einschließlich jeder als "Mittel", "Mittel zum Bereitstellen eines Signals", "Mittel zum Erzeugen eines Signals", etc. bezeichneter Funktionsblöcke kann in Form dedizierter Hardware, z. B "eines Signalanbieters", "einer Signalverarbeitungseinheit", "eines Prozessors", "einer Steuerung" etc. sowie als Hardware fähig zum Ausführen von Software in Verbindung mit zugehöriger Software implementiert sein. Bei Bereitstellung durch einen Prozessor können die Funktionen durch einen einzelnen dedizierten Prozessor, durch einen einzelnen gemeinschaftlich verwendeten Prozessor oder durch eine Mehrzahl von individuellen Prozessoren bereitgestellt sein, von denen einige oder von denen alle gemeinschaftlich verwendet werden können. Allerdings ist der Begriff "Prozessor" oder "Steuerung" bei Weitem nicht auf ausschließlich zur Ausführung von Software fähige Hardware begrenzt, sondern kann Digitalsignalprozessor-Hardware (DSP-Hardware; DSP = Digital Signal Processor), Netzprozessor, anwendungsspezifische integrierte Schaltung (ASIC = Application Specific Integrated Circuit), feldprogrammierbare Logikanordnung (FPGA = Field Programmable Gate Array), Nurlesespeicher (ROM = Read Only Memory) zum Speichern von Software, Direktzugriffsspeicher (RAM = Random Access Memory) und nichtflüchtige Speichervorrichtung (storage) umfassen. Sonstige Hardware, herkömmliche und/oder kundenspezifische, kann auch eingeschlossen sein.

Ein Blockdiagramm kann zum Beispiel ein grobes Schaltdiagramm darstellen, das die Grundsätze der Offenbarung implementiert. Auf ähnliche Weise können ein Flussdiagramm, ein Ablaufdiagramm, ein Zustandsübergangsdiagramm, ein Pseudocode und dergleichen verschiedene Prozesse, Operationen oder Schritte repräsentieren, die zum Beispiel im Wesentlichen in computerlesbarem Medium dargestellt und so durch einen Computer oder Prozessor ausgeführt werden, ungeachtet dessen, ob ein solcher Computer oder Prozessor explizit gezeigt ist. In der Beschreibung oder in den Patentansprüchen offenbarte Verfahren können durch ein Bauelement implementiert werden, das ein Mittel zum Ausführen eines jeden der jeweiligen Schritte dieser Verfahren aufweist.

Es versteht sich, dass die Offenbarung mehrerer, in der Beschreibung oder den Ansprüchen offenbarter Schritte, Prozesse, Operationen oder Funktionen nicht als in der bestimmten Reihenfolge befindlich ausgelegt werden soll, sofern dies nicht explizit oder implizit anderweitig, z. B. aus technischen Gründen, angegeben ist. Daher werden diese durch die Offenbarung von mehreren Schritten oder Funktionen nicht auf eine bestimmte Reihenfolge begrenzt, es sei denn, dass diese Schritte oder Funktionen aus technischen Gründen nicht austauschbar sind. Ferner kann bei einigen Beispielen ein einzelner Schritt, Funktion, Prozess oder Operation mehrere Teilschritte, -funktionen, -prozesse oder -operationen einschließen und/oder in dieselben aufgebrochen werden. Solche Teilschritte können eingeschlossen sein und Teil der Offenbarung dieses Einzelschritts sein, sofern sie nicht explizit ausgeschlossen sind.

## Patentansprüche

1. Verfahren (100) zur Überprüfung einer mechanischen Spannung, die auf eine Spule wirkt, welche als Induktionsspule oder Transformatorspule ausgebildet ist, das Verfahren (100) umfassend:
Erfassen (110) einer oder mehrerer von der mechanischen Spannung abhängiger Messgrößen beim Anliegen eines elektrischen Erregungssignals an die Spule, welche Schwingungsinformation über mechanische Schwingungen der Spule beim Anliegen des elektrischen Erregungssignals umfassen, **dadurch gekennzeichnet, dass** das Erfassen (110) der Messgrößen ein Erfassen der Schwingungsinformation anhand eines von der Spule erzeugten Luftschalls und/oder Körperschalls umfasst, und wobei die Schwingungsinformation Amplituden eines Grundtons und/oder eines oder mehrerer Obertöne und/oder eines oder mehrerer Untertöne der mechanischen Schwingung umfasst; und
Bestimmen (120) der auf die Spule wirkenden mechanischen Spannung anhand der einen oder mehreren erfassten Messgrößen, wobei das Bestimmen (120) der mechanischen Spannung ein Bestimmen der mechanischen Spannung anhand eines Verhältnisses der Amplituden umfasst.

2. Verfahren (100) gemäß Anspruch 1,
wobei die eine oder mehreren von der mechanischen Spannung abhängigen Messgrößen eine elektrische Impedanz der Spule umfassen; und
wobei das Bestimmen (120) der mechanischen Spannung ein Bestimmen der mechanischen Spannung anhand der elektrischen Impedanz umfasst.

3. Verfahren (100) gemäß einem der vorhergehenden Ansprüche, wobei das Bestimmen (120) der mechanischen Spannung anhand der einen oder mehreren Messgrößen ein Bestimmen der mechanischen Spannung anhand eines Vergleichs des elektrischen Erregungssignals mit den ein oder mehreren Messgrößen umfasst.

4. Verfahren (100) gemäß einem der vorhergehenden Ansprüche, ferner umfassend ein Ermitteln einer oder mehrerer Einflussgrößen, welche die ein oder mehreren Messgrößen beim Anliegen des elektrischen Erregungssignals beeinflussen, wobei das Bestimmen der mechanischen Spannung ein Bestimmen der mechanischen Spannung anhand der ein oder mehreren Einflussgrößen und der ein oder mehreren Messgrößen umfasst.

5. Verfahren (100) gemäß einem der vorhergehenden Ansprüche, das Verfahren ferner umfassend:
Ausbilden einer Datenverarbeitungsstruktur zum Bestimmen der auf das induktive Bauteil wirkenden mechanischen Spannung anhand der einen oder mehreren Messgrößen mittels maschinellem Lernen unter Verwendung der einen oder mehreren Messgrößen und einem oder mehreren Referenzwerten für die mechanische Spannung des induktiven Bauteils als Eingangsgrößen für das maschinelle Lernen.

6. Verfahren (100) gemäß einem der vorhergehenden Ansprüche, wobei die zumindest eine Spule (210) ausgebildet ist, um beim Anliegen des elektrischen Erregungssignals an die zumindest eine Spule (210) ein im Inneren der zumindest einen Spule (210) angeordnetes Schmelzgut induktiv zu erwärmen.

7. Verfahren (100) gemäß einem der vorhergehenden Ansprüche,
wobei das Erfassen (110) der einen oder mehreren Messgrößen ein Erfassen einer oder mehrerer erster Messwerte der einen oder mehreren Messgrößen zu einem ersten Zeitpunkt und ein Erfassen einer oder mehrerer zweiter Messwerte der einen oder mehreren Messgrößen zu einem zweiten Zeitpunkt umfasst; und
wobei das Bestimmen (120) der mechanischen Spannung ein Bestimmen der mechanischen Spannung anhand eines Vergleichs der einen oder mehreren ersten Messwerte mit den einen oder mehreren zweiten Messwerten umfasst.

8. Verfahren (100) gemäß einem der vorhergehenden Verfahren, ferner umfassend ein Ermitteln eines Wartungsbedarfs der Spule und/oder einem oder mehreren mit der Spule gekoppelten Elementen anhand der einen oder mehreren Messgrößen.

9. Vorrichtung zum Überprüfen einer mechanischen Spannung, die auf eine Spule wirkt, welche als Induktionsspule oder Transformatorspule ausgebildet ist, die Vorrichtung umfassend:
einen oder mehrere Sensoren (710-1, 710-2) zum Erfassen einer oder mehrerer von der mechanischen Spannung abhängiger Messgrößen beim Anliegen eines elektrischen Erregungssignals an die Spule, welche Schwingungsinformation über mechanische Schwingungen der Spule beim Anliegen des elektrischen Erregungssignals umfassen, **dadurch gekennzeichnet, dass** das Erfassen der Messgrößen ein Erfassen der Schwingungsinformation anhand eines von der Spule erzeugten Luftschalls und/oder Körperschalls umfasst, und wobei die Schwingungsinformation Amplituden eines Grundtons und/oder eines oder mehrerer Obertöne und/oder eines oder mehrerer Untertöne der mechanischen Schwingung umfasst; und
zumindest einen Prozessor (720) zum Bestimmen der auf die Spule wirkenden mechanischen Spannung anhand der einen oder mehreren erfassten Messgrößen, wobei das Bestimmen der mechanischen Spannung ein Bestimmen der mechanischen Spannung anhand eines Verhältnisses der Amplituden umfasst.

10. Vorrichtung gemäß Anspruch 9,
wobei die eine oder mehreren von der mechanischen Spannung abhängigen Messgrößen eine elektrische Impedanz der Spule umfasst; und
wobei der zumindest eine Prozessor (720) ausgebildet ist, um die mechanische Spannung anhand der elektrischen Impedanz zu bestimmen.

11. Vorrichtung gemäß Anspruch 9 oder 10, wobei das Bestimmen der mechanischen Spannung anhand der einen oder mehreren Messgrößen ein Bestimmen der mechanischen Spannung anhand eines Vergleichs des elektrischen Erregungssignals mit den ein oder mehreren Messgrößen umfasst.

## Claims

1. A method (100) for checking a mechanical stress acting on a coil which is configured as an induction coil or transformer coil, the method (100) comprising:
detecting (110) one or more measurement variables which are dependent on the mechanical stress when an electrical excitation signal is applied to the coil and which comprise vibration information about mechanical vibrations of the coil when the electrical excitation signal is applied, **characterized in that** the detection (110) of the measurement variables comprises detecting the vibration information on the basis of airborne sound and/or structure-borne sound generated by the coil, and wherein the vibration information comprises amplitudes of a fundamental tone and/or one or more overtones and/or one or more undertones of the mechanical vibration; and
determining (120) the mechanical stress acting on the coil on the basis of the one or more detected measurement variables, wherein the determination (120) of the mechanical stress comprises determining the mechanical stress on the basis of a ratio of the amplitudes.

2. The method (100) of claim 1,
wherein the one or more measurement variables which are dependent on the mechanical stress comprise an electrical impedance of the coil; and
wherein the determination (120) of the mechanical stress comprises determining the mechanical stress on the basis of the electrical impedance.

3. The method (100) of one of the preceding claims, wherein the determination (120) of the mechanical stress on the basis of the one or more measurement variables comprises determining the mechanical stress on the basis of a comparison of the electrical excitation signal with the one or more measurement variables.

4. The method (100) of one of the preceding claims, further comprising determining one or more influencing variables which influence the one or more measurement variables when the electrical excitation signal is applied, wherein the determination of the mechanical stress comprises determining the mechanical stress on the basis of the one or more influencing variables and the one or more measurement variables.

5. The method (100) of one of the preceding claims, the method further comprising:
configuring a data processing structure for determining the mechanical stress acting on the inductive component on the basis of the one or more measurement variables by means of machine learning using the one or more measurement variables and one or more reference values for the mechanical stress of the inductive component as input variables for the machine learning.

6. The method (100) of one of the preceding claims, wherein the at least one coil (210) is configured to inductively heat a molten material arranged in the interior of the at least one coil (210) when the electrical excitation signal is applied to the at least one coil (210).

7. The method (100) of one of the preceding claims,
wherein the detection (110) of the one or more measurement variables comprises detecting one or more first measurement values of the one or more measurement variables at a first point in time and detecting one or more second measurement values of the one or more measurement variables at a second point in time; and
wherein the determination (120) of the mechanical stress comprises determining the mechanical stress on the basis of a comparison of the one or more first measurement values with the one or more second measurement values.

8. The method (100) of one of the preceding methods, further comprising determining a maintenance requirement of the coil and/or one or more elements coupled to the coil on the basis of the one or more measurement variables.

9. A device for checking a mechanical stress acting on a coil which is configured as an induction coil or transformer coil, the device comprising:
one or more sensors (710-1, 710-2) for detecting one or more measurement variables which are dependent on the mechanical stress when an electrical excitation signal is applied to the coil and which comprise vibration information about mechanical vibrations of the coil when the electrical excitation signal is applied, **characterized in that** the detection of the measurement variables comprises detecting the vibration information on the basis of airborne sound and/or structure-borne sound generated by the coil, and wherein the vibration information comprises amplitudes of a fundamental tone and/or one or more overtones and/or one or more undertones of the mechanical vibration; and
at least one processor (720) for determining the mechanical stress acting on the coil on the basis of the one or more detected measurement variables, wherein the determination of the mechanical stress comprises determining the mechanical stress on the basis of a ratio of the amplitudes.

10. The device of claim 9,
wherein the one or more measurement variables which are dependent on the mechanical stress comprise an electrical impedance of the coil; and
wherein the at least one processor (720) is configured to determine the mechanical stress on the basis of the electrical impedance.

11. The device of claim 9 or 10, wherein the determination of the mechanical stress on the basis of the one or more measurement variables comprises determining the mechanical stress on the basis of a comparison of the electrical excitation signal with the one or more measurement variables.

## Revendications

1. Procédé (100) de vérification d'une tension mécanique qui agit sur une bobine qui est configurée sous forme de bobine d'induction ou de bobine de transformateur, le procédé (100) comprenant le fait de :
détecter (110) une ou plusieurs grandeurs de mesure dépendant de la tension mécanique lors de l'application d'un signal d'excitation électrique à la bobine, lesquelles comprennent des informations de vibration concernant des vibrations mécaniques de la bobine lors de l'application du signal d'excitation électrique, **caractérisé en ce que** le fait de détecter (110) les grandeurs de mesure comprend le fait de détecter les informations de vibration à l'aide d'un bruit aérien et/ou d'un bruit de structure généré par la bobine, et dans lequel les informations de vibration comprennent des amplitudes d'un son fondamental et/ou d'un ou plusieurs sons supérieurs et/ou d'un ou plusieurs sons inférieurs de la vibration mécanique ; et
déterminer (120) la tension mécanique agissant sur la bobine à l'aide de la ou des grandeurs de mesure détectées, dans lequel le fait de déterminer (120) la tension mécanique comprend le fait de déterminer la tension mécanique à l'aide d'un rapport des amplitudes.

2. Procédé (100) selon la revendication 1,
dans lequel la ou les grandeurs de mesure dépendant de la tension mécanique comprennent une impédance électrique de la bobine ; et
dans lequel le fait de déterminer (120) la tension mécanique comprend le fait de déterminer la tension mécanique à l'aide de l'impédance électrique.

3. Procédé (100) selon l'une des revendications précédentes, dans lequel le fait de déterminer (120) la tension mécanique à l'aide de la ou des grandeurs de mesure comprend le fait de déterminer la tension mécanique à l'aide d'une comparaison du signal d'excitation électrique avec la ou les grandeurs de mesure.

4. Procédé (100) selon l'une des revendications précédentes, comprenant en outre le fait de déterminer une ou plusieurs grandeurs d'influence qui influencent la ou les grandeurs de mesure lors de l'application du signal d'excitation électrique, dans lequel le fait de déterminer la tension mécanique comprend le fait de déterminer la tension mécanique à l'aide de la ou des grandeurs d'influence et de la ou des grandeurs de mesure.

5. Procédé (100) selon l'une des revendications précédentes, le procédé comprenant en outre le fait de :
configurer une structure de traitement de données pour déterminer la tension mécanique agissant sur le composant inductif à l'aide de la ou des grandeurs de mesure au moyen d'un apprentissage machine en utilisant la ou les grandeurs de mesure et une ou plusieurs valeurs de référence pour la tension mécanique du composant inductif en tant que grandeurs d'entrée pour l'apprentissage machine.

6. Procédé (100) selon l'une des revendications précédentes, dans lequel l'au moins une bobine (210) est configurée pour chauffer par induction un produit en fusion disposé à l'intérieur de l'au moins une bobine (210) lors de l'application du signal d'excitation électrique à l'au moins une bobine (210).

7. Procédé (100) selon l'une des revendications précédentes,
dans lequel le fait de détecter (110) la ou les grandeurs de mesure comprend le fait de détecter une ou plusieurs premières valeurs de mesure de la ou des grandeurs de mesure à un premier instant et le fait de détecter une ou plusieurs deuxièmes valeurs de mesure de la ou des grandeurs de mesure à un deuxième instant ; et
dans lequel le fait de déterminer (120) la tension mécanique comprend le fait de déterminer la tension mécanique à l'aide d'une comparaison de la ou des premières valeurs de mesure avec la ou les deuxièmes valeurs de mesure.

8. Procédé (100) selon l'une des revendications précédentes, comprenant en outre le fait de déterminer un besoin de maintenance de la bobine et/ou d'un ou de plusieurs éléments couplés à la bobine à l'aide de la ou des grandeurs de mesure.

9. Dispositif de vérification d'une tension mécanique qui agit sur une bobine qui est configurée sous forme de bobine d'induction ou de bobine de transformateur, le dispositif comprenant :
un ou plusieurs capteurs (710-1, 710-2) pour détecter une ou plusieurs grandeurs de mesure dépendant de la tension mécanique lors de l'application d'un signal d'excitation électrique à la bobine, lesquelles comprennent des informations de vibration concernant des vibrations mécaniques de la bobine lors de l'application du signal d'excitation électrique, **caractérisé en ce que** le fait de détecter les grandeurs de mesure comprend le fait de détecter les informations de vibration à l'aide d'un bruit aérien et/ou d'un bruit de structure généré par la bobine, et dans lequel les informations de vibration comprennent des amplitudes d'un son fondamental et/ou d'un ou plusieurs sons supérieurs et/ou d'un ou plusieurs sons inférieurs de la vibration mécanique ; et
au moins un processeur (720) pour déterminer la tension mécanique agissant sur la bobine à l'aide de la ou des grandeurs de mesure détectées, dans lequel le fait de déterminer la tension mécanique comprend le fait de déterminer la tension mécanique à l'aide d'un rapport des amplitudes.

10. Dispositif selon la revendication 9,
dans lequel la ou les grandeurs de mesure dépendant de la tension mécanique comprennent une impédance électrique de la bobine ; et
dans lequel l'au moins un processeur (720) est configuré pour déterminer la tension mécanique à l'aide de l'impédance électrique.

11. Dispositif selon la revendication 9 ou 10, dans lequel le fait de déterminer la tension mécanique à l'aide de la ou des grandeurs de mesure comprend le fait de déterminer la tension mécanique à l'aide d'une comparaison du signal d'excitation électrique avec la ou les grandeurs de mesure.
